# EUROPÄISCHE PATENTSCHRIFT

(11) **EP 0 568 806 B1**
(45) Veröffentlichungstag und Bekanntmachung des Hinweises auf die Patenterteilung: **11.06.1997**
(21) Anmeldenummer: 93105082.7
(22) Anmeldetag: 27.03.1993
(51) Int. Cl.: C09B 11/02, C09B 11/18

(54) **Verfahren zur Herstellung von Di- oder Triarylmethanfarbstoffen durch Oxidation**
Method for producing diarylmethane or triarylmethane dyestuffs by oxidation
Procédé pour la préparation de colorants de type di- ou triarylméthane par oxidation

(30) Priorität: 08.04.1992 DE 4211783
(43) Veröffentlichungstag der Anmeldung: 10.11.1993
(73) Patentinhaber: BASF Aktiengesellschaft, 67063 Ludwigshafen (DE)
(72) Erfinder: Gessner, Thomas, Dr., W-6900 Heidelberg (DE); Mayer, Udo, Dr., W-6710 Frankenthal (DE)

(56) Entgegenhaltungen:
- EP-A- 0 330 419
- FR-A- 2 149 917
- FR-A- 2 197 856
- FR-A- 2 241 589
- PATENT ABSTRACTS OF JAPAN vol. 14, no. 211 (C-715)(4154) 2. Mai 1990

## Beschreibung

Die vorliegende Erfindung betrifft ein neues Verfahren zur Herstellung von Di- oder Triarylmethanfarbstoffen durch Oxidation von Di- oder Triarylmethanen in Gegenwart eines Verdünnungsmittels und eines Sauerstoff übertragenden Katalysators, der ein komplex gebundenes Schwermetallion enthält.

Aus der JP-A-74 530/1978 ist die Herstellung von Triarylmethanfarbstoffen durch Oxidation von Triarylmethanen mit Wasserstoffperoxid in Gegenwart von Kupfer(II)salzen, z.B. Kupfersulfat oder Kupferchlorid, bekannt. Weiterhin beschreibt die JP-A-57 848/1981 die Durchführung des Oxidationsprozesses mit Wasserstoffperoxid, Chloranil und einer Metallverbindung, z.B. Kupfer(I)bromid oder Vanadiumpentoxid.

Gemäß den Ausführungsbeispielen der JP-A-47 160/1990 erfolgt die Oxidation von Carboxylgruppen enthaltenden Triarylmethanen zu Phthaliden mit Sauerstoff als Oxidationsmittel in Gegenwart von Eisen(II)chlorid, Mangan(II)sulfat und Ethylendiamintetraessigsäure.

Aus der DE-A-3 005 397 ist die Herstellung von 3,3-Bis(4-dimethylaminophenyl)-6-dimethylaminophthalid durch Oxidation des entsprechenden Diarylmethans mit Wasserstoffperoxid in Gegenwart eines Kobaltkomplexes von Azofarbstoffen bekannt.

Die FR-A-2 241 589 beschreibt die katalytische Oxidation von Di- oder Triarylmethanderivaten, wobei Luft als Oxidationsmittel und Eisen-tetraazannulene als Katalysator dienen.

Es hat sich gezeigt, daß die Verfahren des Standes der Technik noch Mängel aufweisen. Beispielsweise sind die genannten Verfahren für die Herstellung von Di- oder Triarylmethanfarbstoffen nicht universell anwendbar.

Aufgabe der vorliegenden Erfindung war es nun, ein neues Verfahren zur Herstellung von Di- oder Triarylmethanfarbstoffen bereitzustellen, das von den entsprechenden Di- oder Triarylmethanen ausgeht und in Gegenwart eines Sauerstoff übertragenden Katalysators, der ein komplex gebundenes Schwermetall enthält, durchgeführt wird. Mittels des neuen Verfahrens sollten die Zielprodukte auf einfache Weise und in guter Ausbeute und hoher Reinheit erhalten werden.

Schwermetall enthält, durchgeführt wird. Mittels des neuen Verfahrens sollten die Zielprodukte auf einfache Weise und in guter Ausbeute und hoher Reinheit erhalten werden.

Es wurde nun gefunden, daß die Herstellung von Farbstoffen der Formel I 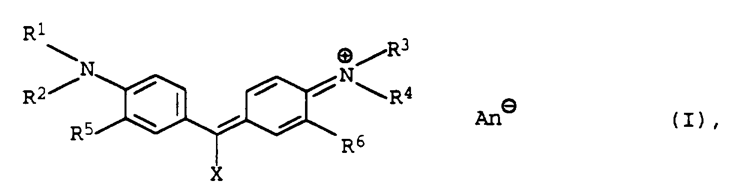 in der
- R¹, R², R³ und R⁴: unabhängig voneinander jeweils C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl,
- R⁵ und R⁶: unabhängig voneinander jeweils Wasserstoff oder Methyl,
- X: Wasserstoff, gegebenenfalls substituiertes Phenyl oder gegebenenfalls substituiertes Naphthyl und
- An^{⊖}: das Äquivalent eines Anions bedeuten,
durch Oxidation einer Leukoverbindung der Formel II 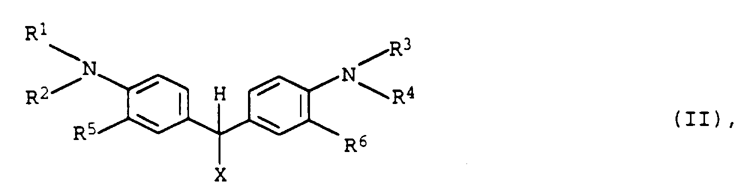 in der R¹, R², R³, R⁴, R⁵, R⁶ und X jeweils die obengenannte Bedeutung besitzen, in Gegenwart eines Verdünnungsmittels und eines Sauerstoff übertragenden Katalysators, der ein komplex gebundenes Schwermetallion enthält, vorteilhaft gelingt, wenn man als Oxidationsmittel Wasserstoffperoxid, eine Wasserstoffperoxid freisetzende Verbindung, ein organisches Hydroperoxid oder eine Percarbonsäure verwendet und wenn der Sauerstoff übertragende Katalysator aus der Klasse der Porphyrine, Tetraaza[14]annulene, Phthalocyanine oder Tetraazacyclodecane stammt.

Alle in den obengenannten Formeln I und II auftretenden Alkylgruppen können sowohl geradkettig als auch verzweigt sein.

Wenn in den obengenannten Formeln I und II substituierte Alkylgruppen auftreten, so können als Substituenten z.B. Hydroxy, Chlor, Cyano, Phenyl oder Hydroxysulfonylphenyl in Betracht kommen.

Wenn in den obengenannten Formeln I und II substituierte Phenylgruppen auftreten, so können als Substituenten z.B. Methyl, Chlor, Amino, C₁-C₄-Mono- oder Dialkylamino, Mono- oder Diphenylamino, Hydroxy, C₁-C₄-Alkoxy oder Hydroxysulfonyl in Betracht kommen.

Wenn in den obengenannten Formeln I und II substituierte Naphthylgruppen auftreten, so können als Substituenten z.B. Amino, C₁-C₄-Mono- oder Dialkylamino, Mono- oder Diphenylamino oder Hydroxysulfonyl in Betracht kommen.

Wenn in der obengenannten Formel substituierte Alkyl-, Phenyl- oder Naphthylgruppen auftreten, so sind sie in der Regel ein- bis dreifach, vorzugsweise ein- bis zweifach substituiert.

Geeignete Reste R¹, R², R³ und R⁴ sind z.B. Methyl, Ethyl, Propyl, Isopropyl, Butyl, Isobutyl, sec-Butyl, Pentyl, Isopentyl, Neopentyl, tert-Pentyl, Hexyl, Heptyl, Octyl, 2-Ethylhexyl, 2-Hydroxyethyl, 2- oder 3-Hydroxypropyl, 2- oder 4-Hydroxybutyl, 2-Chlorethyl, 2- oder 3-Chlorpropyl, 2- oder 4-Chlorbutyl, 2-Cyanoethyl, 2- oder 3-Cyanopropyl, 2- oder 4-Cyanobutyl, Benzyl, 1- oder 2-Phenylethyl, Hydroxysulfonylbenzyl, Hydroxysulfonylphenylethyl, 2-Methoxyethyl, 2-Ethoxyethyl, 2- oder 3-Methoxypropyl, 2- oder 3-Ethoxypropyl, 2- oder 4-Methoxybutyl, 2- oder 4-Ethoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 4,8-Dioxadecyl, 5-Hydroxy-3-oxapentyl, 5-Hydroxy-1,4-dimethyl-3-oxapentyl, 8-Hydroxy-3,6-dioxaoctyl, 11-Hydroxy-3,6,9-trioxaundecyl, Phenyl, 1-, 2- oder 3-Methylphenyl oder 1-, 2- oder 3-Ethylphenyl.

Geeignete Reste X sind z.B. Phenyl, 2-, 3- oder 4-Methylphenyl, 2,4-Dimethylphenyl, 2-, 3- oder 4-Chlorphenyl, 2,4- oder 2,6-Dichlorphenyl, 2-, 3- oder 4-Aminophenyl, 2-, 3- oder 4-Mono- oder Dimethylaminophenyl, 2-, 3- oder 4-Mono- oder Diphenylaminophenyl, 2-, 3- oder 4-Hydroxyphenyl, 2-, 3- oder 4-Methoxyphenyl, 2,4-Dimethoxyphenyl, 2-, 3- oder 4-Hydroxysulfonylphenyl, 2,4-Dihydroxysulfonylphenyl, 2,4-Dihydroxysulfonyl-5-hydroxyphenyl, naphthyl, Mono- oder Dimethylaminonaphthyl, Mono- oder phenylaminonaphthyl oder Hydroxysulfonylnaphthyl.

Geeignete Anionen sind z.B. Fluorid, Chlorid, Bromid, Iodid, Hydrogensulfat, Sulfat, Tetrafluoroborat, Formiat, Acetat, Propionat, Mono-, Di- oder Trichloracetat, Lactat, Methoxyacetat, Citrat, Succinat, Methylsulfonat, Benzolsulfonat oder 2- oder 4-Methylbenzolsulfonat.

Wenn die Farbstoffe der Formel I Hydroxysulfonylreste aufweisen und in Salzform vorliegen, kommen als Gegenionen Metall- oder Ammoniumionen in Betracht. Metallionen sind insbesondere die Lithium-, Natrium- oder Kaliumionen. Unter Ammoniumionen im erfindungsgemäßen Sinne sind entweder unsubstituierte oder substituierte Ammoniumkationen zu verstehen. Substituierte Ammoniumkationen sind z.B. Monoalkyl-, Dialkyl-, Trialkyl-, Tetraalkyl- oder Benzyltrialkylammoniumkationen oder solche Kationen, die sich von stickstoffhaltigen fünf- oder sechsgliedrigen gesättigten Heterocyclen ableiten, wie Pyrrolidinium-, Piperidinium-, Morpholinium-, Piperazinium- oder N-Alkylpiperaziniumkationen oder deren N-monoalkyl- oder N,N-dialkylsubstituierte Produkte. Unter Alkyl ist dabei im allgemeinen geradkettiges oder verzweigtes C₁-C₂₀-Alkyl zu verstehen, das durch Hydroxylgruppen substituiert und/oder durch Sauerstoffatome in Etherfunktion unterbrochen sein kann.

Hervorzuheben sind Natrium- oder Kaliumionen.

Bevorzugt ist eine Verfahrensweise zur Herstellung von Farbstoffen der Formel I, in der R⁵ und R⁶ jeweils Wasserstoff bedeuten.

Weiterhin bevorzugt ist eine Verfahrensweise zur Herstellung von Farbstoffen der Formel I, in der R¹, R², R³ und R⁴ jeweils gegebenenfalls substituiertes C₁-C₄-Alkyl, insbesondere durch Hydroxy oder Hydroxysulfonylphenyl substituiertes C₁-C₄-Alkyl bedeuten.

Besonders bevorzugt ist eine Verfahrensweise zur Herstellung von Farbstoffen der Formel I, in der X Wasserstoff oder gegebenenfalls substituiertes Phenyl, insbesondere durch Chlor oder Hydroxysulfonyl substituiertes Phenyl bedeutet.

Weiterhin besonders bevorzugt ist eine Verfahrensweise zur Herstellung von Farbstoffen der Formel I, in der R¹, R², R³ und R⁴ jeweils C₁-C₄-Alkyl, C₂-C₄-Hydroxyalkyl oder Hydroxysulfonylbenzyl bedeuten.

Besonders hervorzuheben ist eine Verfahrensweise zur Herstellung von Farbstoffen der Formel I, in der R¹ und R³ jeweils Ethyl, R² und R⁴ jeweils Hydroxysulfonylbenzyl, R⁵ und R⁶ jeweils Wasserstoff und X durch Hydroxysulfonyl substituiertes Phenyl bedeuten.

Geeignete Katalysatoren, die Sauerstoff übertragen und ein komplex gebundenes Schwermetallion enthalten, stammen z.B. aus der Klasse der Porphyrine, Tetraaza[14]annulene, Phthalocyanine oder Tetraazacyclotetradecane.

Die komplex gebundenen Schwermetallionen leiten sich z.B. von Eisen, Mangan, Kobalt oder Chrom ab. Die Schwermetallionen sind in der Regel 2- oder 3-wertig.

Solche Verbindungen sind an sich bekannt und beispielsweise in der DE-A-2 427 606, WO-A-91/01985, Kontakte 1985, 38, oder in Chem. Lett. 1991, 1217, beschrieben.

Sie gehorchen beispielsweise den folgenden Formeln:

### Porphyrine:

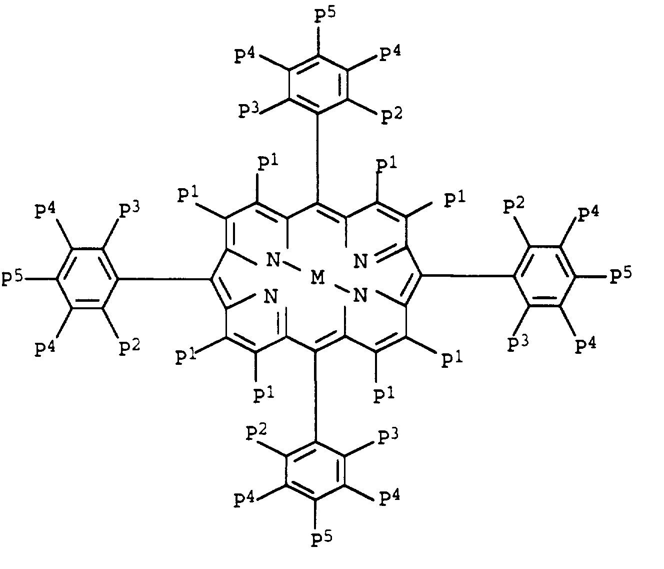

- P¹ =: Wasserstoff, Methyl, Ethyl, Chlor oder Brom
- P², P³, P⁴, P⁵ =: Wasserstoff, Methyl, Hydroxysulfonyl oder C₁-C₄-Alkoxy
- M =: Eisen, Mangan, Kobalt oder Chrom

### Tetraaza[14]annulene:

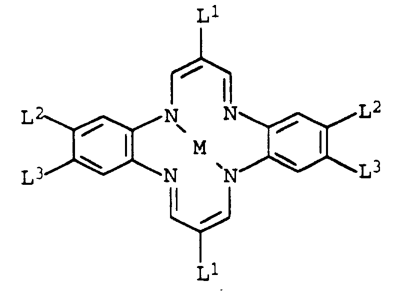

- L¹ =: Wasserstoff, C₁-C₈-Alkyl, Chlor, C₁-C₄-Alkoxy, gegebenenfalls substituiertes Phenyl, gegebenenfalls substituiertes Phenylazo, C₁-C₄-Alkoxycarbonyl oder gegebenenfalls durch C₁-C₄-Alkyl, Carboxyl, C₄-C₄-Alkoxycarbonyl oder Carbamoyl substituiertes Pyridylium
- L², L³ =: Wasserstoff, Methyl oder L² und L³ zusammen einen anellierten Benzolring
- M =: Eisen, Mangan, Kobalt oder Chrom

### Phthalocyanine:

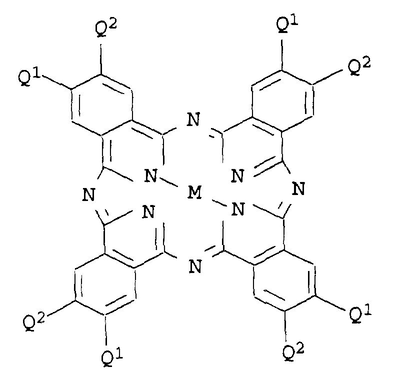

- Q¹, Q² =: C₁-C₄-Alkyl, Chlor, Brom, C₁-C₄-Alkoxy oder Q¹ und Q² zusammen einen anellierten Benzolring
- M: Eisen, Mangan, Kobalt oder Chrom

### Tetraazacyclotetradecane:

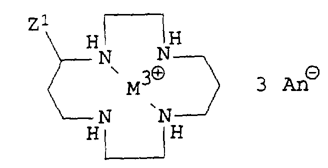

- Z¹ =: 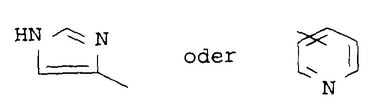
- An^{⊖} =: Äquivalent eines Anions
- M =: Eisen, Mangan, Kobalt oder Chrom

Bevorzugt ist die Verwendung von Katalysatoren aus der Klasse der Tetraaza[14]annulene oder Phthalocyanine.

Bevorzugt ist weiterhin die Verwendung von Katalysatoren, die ein komplex gebundenes Eisenion enthalten.

Besonders bevorzugt ist die Verwendung von Eisentetraaza[14]annulenen oder Eisenphthalocyaninen als Katalysatoren.

Insbesondere hervorzuheben ist die Verwendung von Eisen-5,14-dihydrodibenzo[b,1][5,9,14,18]tetraaza[14]annulen oder Eisenphthalocyanin als Katalysator.

Die Katalysatoren können homogen oder heterogen in Lösung angewandt werden. Auch ihre Fixierung auf einem Trägermaterial, z.B. Kieselgel oder Ionenaustauscherharz, ist möglich.

Als Oxidationsmittel im erfindungsgemäßen Verfahren dient Wasserstoffperoxid, eine Wasserstoffperoxid freisetzende Verbindung, ein organisches Hydroperoxid oder eine Percarbonsäure.

Als Wasserstoffperoxid freisetzende Verbindungen können z.B. Alkaliperborate oder -percarbonate in Betracht kommen.

Geeignete organische Hydroperoxide sind z.B. Cumolhydroperoxid oder Alkylhydroperoxide, dabei insbesondere tert-Butylhydroperoxid.

Geeignete Percarbonsäuren sind z.B. Peressigsäure, m-Chlorperbenzoesäure, Magnesium-bis(monoperoxyphthalat)-hexahydrat oder 1,12-Dodecandipersäure.

Die Verwendung von Wasserstoffperoxid, tert-Butylhydroperoxid oder Magnesium-bis(monoperoxyphthalat)-hexahydrat, ist hervorzuheben.

Bei Verwendung von Wasserstoffperoxid als Oxidationsmittel wird dies in der Regel in Form einer 10 bis 70 gew.-%igen wäßrigen Lösung angewandt.

Die Verwendung der organischen Hydroperoxide geschieht im allgemeinen in Form einer ca. 70 gew.-%igen wäßrigen Lösung.

Magnesium-bis(monoperoxyphthalat)-hexahydrat kann in fester Form, als wäßrige Lösung oder als wäßrige Suspension angewandt werden.

In manchen Fällen kann es auch von Vorteil sein, das Verfahren zusätzlich in Gegenwart von geringen Mengen (im allgemeinen bis zu 2 mol-%, bezogen auf die Leukoverbindung II) einer das Oxidationsmittel stabilisierenden Verbindung, z.B. Ethylendiamintetraessigsäure, Diethylentriaminpentaessigsäure, Nitrilotriessigsäure, β-Alanindiessigsäure, Isoserindiessigsäure, Ethylendiamintetra(methylenphosphonsäure), Hexamethylendiamintetra(methylenphosphonsäure), Diethylentriaminpenta(methylenphosphonsäure) oder deren Alkalisalze, Trimethylessigsäure,p-Toluolsulfonsäure, Natriumsilicat, Aceton, Natriumfluorid, Cyanamid oder Ascorbinsäure und/oder eines Stickstoff enthaltenden aromatischen Heterocyclus, z.B. Imidazol, N-Methylimidazol, Pyridin, Pyrazol, Pyrrol oder 1,3,4-Triazol, durchzuführen.

Bei der Anwendung von Wasserstoffperoxid oder einer Wasserstoffperoxid freisetzenden Verbindung als Oxidationsmittel kann es auch von Vorteil sein, das erfindungsgemäße Verfahren zusätzlich in Gegenwart von geringen Mengen (im allgemeinen bis zu 1 Gew.-%, bezogen auf das Gewicht der Reaktionspartner) eines Entschäumers und Entlüfters durchzuführen, um den bei der Umsetzung entstehenden Sauerstoff besser abzuführen. Geeignete Verbindungen dieser Art sind z.B. langkettige Alkohole oder Phosphorsäureester.

Bei der Anwendung von Wasserstoffperoxid oder einer Wasserstoffperoxid freisetzenden Verbindung als Oxidationsmittel kann es weiterhin von Vorteil sein, das erfindungsgemäße Verfahren zusätzlich in Gegenwart von 0,1 bis 10 mol-%, vorzugsweise 1 bis 10 mol-%, jeweils bezogen auf 1 mol Leukoverbindung II, an Benzoesäure, m-Chlorbenzoesäure, phosphoriger Säure, salpetriger Säure oder eines Nitrits, vorzugsweise eines Alkalinitrits, durchzuführen. Dadurch kann sowohl die Reaktionstemperatur (20 bis 60°C, vorzugsweise 30 bis 50°C) als auch die Menge an Wasserstoffperoxid oder Wasserstoffperoxid freisetzender Verbindung verringert werden.

Je mol Leukoverbindung der Formel II verwendet man in der Regel 1 bis 5 mol, vorzugsweise 1,5 bis 4 mol und insbesondere 1,5 bis 2,5 mol an Wasserstoffperoxid, 0,9 bis 3 mol, vorzugsweise 1 bis 2 mol und insbesondere 1 bis 1,5 mol organisches Hydroperoxid oder 0,9 bis 3 mol, vorzugsweise 1 bis 2 mol Percarbonsäure (jeweils bezogen auf einen Peroxycarboxyrest).

Der Sauerstoff übertragende Katalysator, der ein komplex gebundenes Schwermetallion enthält, wird im allgemeinen in einer Menge von 0,1 bis 5 mol-%, vorzugsweise 1 bis 3 mol-%, jeweils bezogen auf die Leukoverbindung II, angewandt.

Geeignete Verdünnungsmittel sind z.B. Wasser, Eisessig, Chloroform, Toluol, N,N-Dimethylformamid, N-Methylpyrrolidon, Alkohole, wie Methanol, Ethanol, Propanol, Isopropanol, Butanol oder Isobutanol, Glykole, wie Ethylenglykol oder Propylenglykol oder deren Gemische.

Vorzugsweise verwendet man Wasser oder Gemische von Wasser mit Eisessig, Alkoholen oder Glykolen.

Die Verwendung von Wasser als Verdünnungsmittel ist besonders hervorzuheben.

Zweiphasige Gemische, die z.B. aus der Anwendung von Wasser und einem nicht oder nur begrenzt mit Wasser mischbaren Lösungsmittel resultieren, werden gegebenenfalls mit einem Phasentransferkatalysator versehen. Als Phasentransferkatalysatoren kommen dabei die üblichen, an sich bekannten Produkte, wie Tetraalkylammoniumhalogenide oder Benzyltrialkylammoniumhalogenide oder -hydrogensulfate in Betracht.

Das neue Verfahren wird in der Regel bei Normaldruck und einer Temperatur von 20 bis 100°C, vorzugsweise von 40 bis 90°C durchgeführt. Es kann sowohl in kontinuierlicher als auch diskontinuierlicher Arbeitsweise vorgenommen werden.

Man führt das neue Verfahren zweckmäßig so durch, daß man die Leukoverbindung II und Verdünnungsmittel vorlegt, wobei das Gewichtsverhältnis Leukoverbindung II : Verdünnungsmittel in der Regel 1:10 bis 2:1, vorzugsweise 3:7 bis 3:2 beträgt. Danach gibt man den Katalysator zu und dosiert anschließend das Oxidationsmittel, gegebenenfalls als wäßrige Lösung, unter gutem Rühren zu dem Gemisch. Die Oxidation erfolgt dann unter Rühren bei der obengenannten Temperatur.

Nach Zugabe des Oxidationsmittels ist die Umsetzung in der Regel beendet. Man bringt das Reaktionsgemisch auf eine Temperatur von 20 bis 80°C und läßt noch 10 bis 120 Minuten nachrühren. Das Zielprodukt kann dann auf üblichem Weg, z.B. durch Entfernen des Lösungsmittels bis zur Trockne oder durch Aussalzen mittels Natriumsulfat als Niederschlag abgetrennt und gegebenenfalls nochmals umgefällt werden.

Das erfindungsgemäße Verfahren ist einfach durchzuführen und liefert die Farbstoffe der Formel I in guter Ausbeute und hoher Reinheit. Weitere Vorteile des neuen Verfahren sind die Verwendung eines schwermetallfreien Oxidationsmittels und eine kurze Reaktionszeit.

Bei den Farbstoffen der Formel I handelt es sich um wertvolle Farbstoffe zum Färben von Papier oder zur Anwendung im Sanitärbereich.

Die folgenden Beispiele sollen die Erfindung näher erläutern.

### Beispiel 1

Zu 96,3 g (50 mmol) einer 40 gew.-%igen wäßrigen Lösung von 4',4''-Bis[N-ethyl-N-(3-hydroxysulfonylbenzyl)amino]triphenylmethan-2-sulfonsäure-Natriumsalz wurden 0,34 g (1 mmol) Eisen-5,14-dihydrodibenzo[b,i][5,9,14,18]tetraaza[14]annulen, 0,44 g (1 mmol) Ethylendiamintetra(methylenphosphonsäure) und 0,08 g (1 mmol) N-Methylimidazol gegeben und 11,4 g (100 mmol) 30 gew.-%iges wäßriges Wasserstoffperoxid unter kräftigem Rühren innerhalb von 25 Minuten bei 80°C zugetropft. Nach dem Abkühlen des Reaktionsgemisches auf 60°C wurde die Lösung 1 Stunde nachgerührt und anschließend filtriert. Das Filtrat wurde mit Natronlauge auf einen pH-Wert von 4 eingestellt. Nach Abziehen des Wassers und anschließender Trocknung wurden 43,5 g Farbstoff erhalten.

### Beispiel 2

Zu 96,3 g (50 mmol) einer 40 gew.-%igen wäßrigen Lösung von 4',4''-Bis[N-ethyl-N-(3-hydroxysulfonylbenzyl)amino]triphenylmethan-2-sulfonsäure-Natriumsalz wurden 0,34 g (1 mmol) Eisen-5,14-dihydrodibenzo[b,i][5,9,14,18]tetraaza[14]annulen, 0,28 g (1 mmol) Ethylendiamintetraessigsäure und 0,08 g (1 mmol) N-Methylimidazol gegeben und 9,66 g (75 mmol) t-Butylhydroperoxid (70 gew.-%ig, wäßrig) unter kräftigem Rühren innerhalb von 25 Minuten bei 40°C zugetropft. Die Reaktionsmischung wurde noch eine Stunde bei 40°C gerührt und anschließend filtriert. Die Lösung wurde mit Natronlauge auf einen pH-Wert von 4 gestellt. Nach Abziehen des Wassers und anschließender Trocknung wurden 45,3 g Farbstoff erhalten.

### Beispiel 3

Zu 96,3 g (50 mmol) einer 40 gew.-%igen wäßrigen Lösung von 4',4''-Bis[N-ethyl-N-(3-hydroxysulfonylbenzyl)amino]triphenylmethan-2-sulfonsäure-Natriumsalz wurden 0,34 g (1 mmol) Eisen-5,14-dihydrodibenzo[b,i][5,9,14,18]tetraaza[14]annulen gegeben und eine Lösung von 24,19 g (45 mmol) Magnesium-bis(monoperoxyphthalat)-hexahydrat (85 gew.-%ig) in 200 ml Wasser unter kräftigem Rühren innerhalb von 25 Minuten bei 90°C zugetropft. Nach dem Abkühlen der Reaktionsmischung auf 60°C wurde die Lösung noch 1 Stunde gerührt und anschließend filtriert. Durch Zugabe von Natriumsulfat wurde der Farbstoff ausgesalzen und heiß von der wäßrigen Phase abgetrennt. Das Farbharz wurde in Wasser gelöst. Die Lösung wurde mit Natronlauge auf einen pH-Wert 4 eingestellt. Nach Abziehen des Wassers und anschließender Trocknung wurden 52,8 g salzhaltiger Farbstoff erhalten.

### Beispiel 4

Zu 96,6 g (50 mmol) einer 40 gew.-%igen wäßrigen Lösung von 4',4''-Bis[N-ethyl-N-(3-hydroxysulfonylbenzyl)amino]triphenylmethan-2-sulfonsäure-Natriumsalz wurden 0,17 g (0,5 mmol) Eisen-5,14-dihydrodibenzo[b,i][5,9,14,18]tetraaza[14]annulen, 0,63 g (0,5 mmol) einer 40 gew.-%igen wäßrigen Lösung des Pentanatriumsalzes der Diethylentriaminpentaessigsäure, 0,305 g (2,5 mmol) Benzoesäure und 0,5 g eines Entschäumers auf Basis von langkettigen Alkoholen gegeben und 12,46 g (110 mmol) 30 gew.-%iges wäßriges Wasserstoffperoxid unter kräftigem Rühren innerhalb von 10 Minuten bei 50°C zugetropft. Die Reaktionsmischung wurde noch 10 Minuten bei 50°C gerührt und anschließend klärfiltriert. Das Filtrat wurde mit Natronlauge auf einen pH-Wert von 4 bis 5 eingestellt. Es wurden 112 g rötlich metallisch glänzende Lösung erhalten. Aus der UV/VIS-spektroskopischen bestimmten Farbstärke dieser Lösung wurde eine Ausbeute von 94 % berechnet.

### Beispiel 5

Zu 96,3 g (50 mmol) einer 40 gew.-%igen wäßrigen Lösung von 4',4"-Bis[N-ethyl-N-(3-hydroxysulfonylbenzyl)amino]triphenylmethan-2-sulfonsäure-Natriumsalz wurden 0,34 g (1,0 mmol) Eisen-5,14-dihydrodibenzo[b,i][5,9,14,18]tetraaza[14]annulen, 1,26 g (1,0 mmol) einer 40 gew.-%igen wäßrigen Lösung des Pentanatriumsalzes der Diethylentriaminpentaessigsäure, 1,72 g (2,5 mmol) Natriumnitrit und 0,5 g eines Entschäumers auf Basis von langkettigen Alkoholen gegeben und 12,46 g (110 mmol) 30 gew.-%iges wäßriges Wasserstoffperoxid unter kräftigem Rühren innerhalb von 10 Minuten bei 40°C zugetropft. Die Reaktionsmischung wurde anschließend klärfiltriert. Das Filtrat wurde mit Natronlauge auf einen pH-Wert von 4 bis 5 eingestellt. Es wurden 114 g rötlich metallisch glänzende Lösung erhalten. Aus der UV/VIS-spektroskopischen bestimmten Farbstärke dieser Lösung wurde eine Ausbeute von 93 % berechnet.

Analog den voranstehenden Beispielen lassen sich die Leukoverbindungen der Formel 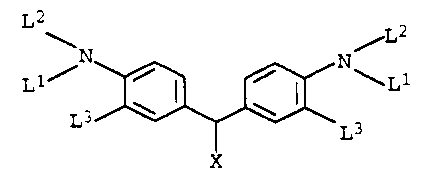 oxidieren.

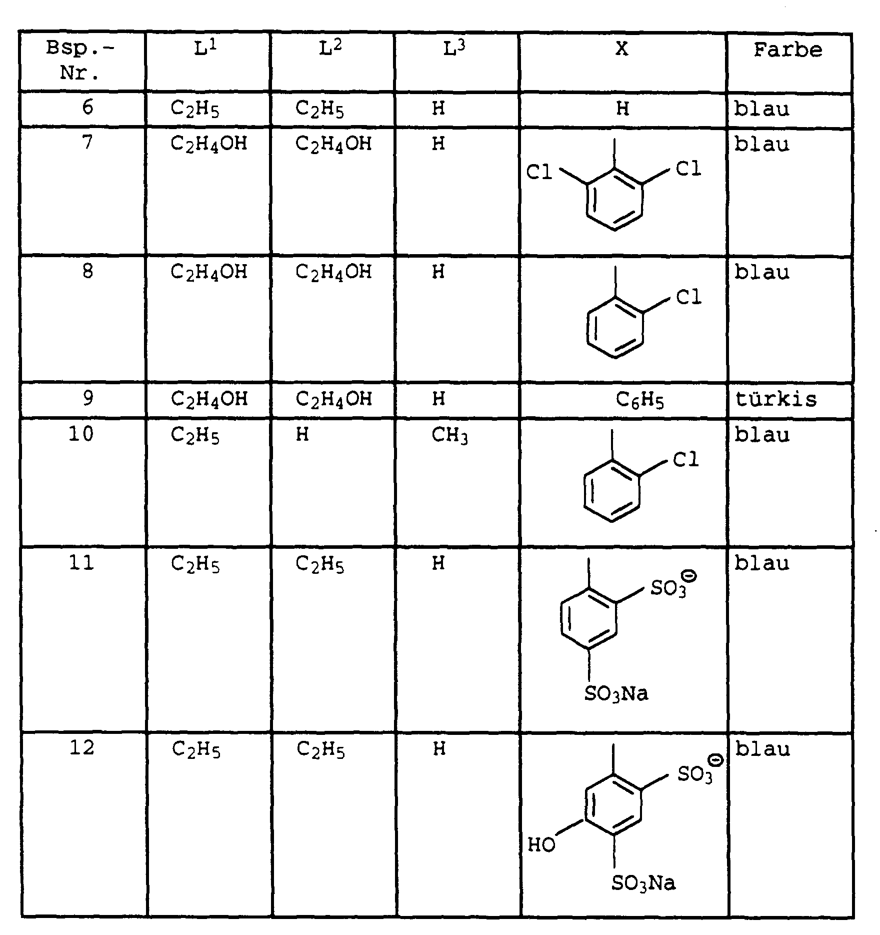

## Patentansprüche

1. Verfahren zur Herstellung von Farbstoffen der Formel I 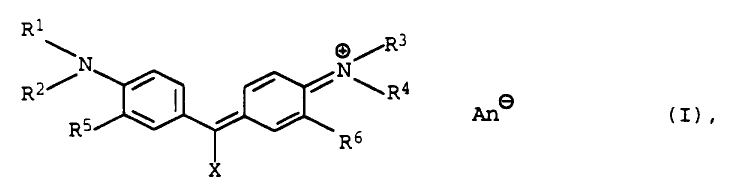 in der
R¹, R², R³ und R⁴ unabhängig voneinander jeweils C₁-C₈-Alkyl, das gegebenenfalls substituiert ist und durch 1 bis 3 Sauerstoffatome in Etherfunktion unterbrochen sein kann, Phenyl oder C₁-C₄-Alkylphenyl,
R⁵ und R⁶ unabhängig voneinander jeweils Wasserstoff oder Methyl,
X Wasserstoff, gegebenenfalls substituiertes Phenyl oder gegebenenfalls substituiertes Naphthyl und
An^{⊖} das Äquivalent eines Anions bedeuten,
durch Oxidation einer Leukoverbindung der Formel II 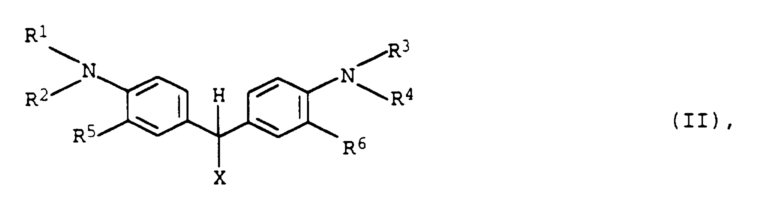 in der R¹, R², R³, R⁴, R⁵, R⁶ und X jeweils die obengenannte Bedeutung besitzen, in Gegenwart eines Verdünnungsmittels und eines Sauerstoff übertragenden Katalysators, der ein komplex gebundenes Schwermetallion enthält, dadurch gekennzeichnet, daß man als Oxidationsmittel Wasserstoffperoxid, eine Wasserstoffperoxid freisetzende Verbindung, ein organisches Hydroperoxid oder eine Percarbonsäure verwendet und daß der Sauerstoff übertragende Katalysator aus der Klasse der Porphyrine, Tetraaza[14]annulene, Phthalocyanine oder Tetraazacyclodecane stammt.

2. Verfahren nach Anspruch 1, dadurch gekennzeichnet, daß R⁵ und R⁶ jeweils Wasserstoff bedeuten.

3. Verfahren nach Anspruch 1, dadurch gekennzeichnet, daß R¹, R², R³ und R⁴ jeweils gegebenenfalls substituiertes C₁-C₄-Alkyl bedeuten.

4. Verfahren nach Anspruch 1, dadurch gekennzeichnet, daß X Wasserstoff oder gegebenenfalls substituiertes Phenyl bedeutet.

5. Verfahren nach Anspruch 1, dadurch gekennzeichnet, daß sich das im Sauerstoff übertragenden Katalysator komplex gebundene Schwermetallion von Eisen, Mangan, Kobalt oder Chrom ableitet.

## Claims

1. A process for preparing dyes of the formula I 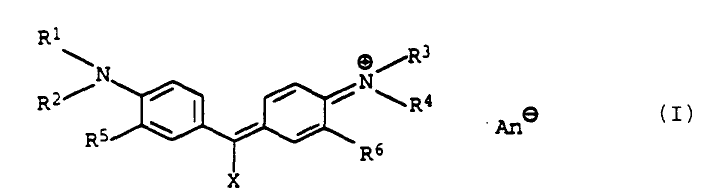 where
R¹, R², R³ and R⁴ are independently of one another C₁-C₈-alkyl, which may be substituted and may be interrupted by from 1 to 3 oxygen atoms in ether function, phenyl or C₁-C₄-alkylphenyl,
R⁵ and R⁶ are independently of each other hydrogen or methyl,
X is hydrogen, substituted or unsubstituted phenyl or substituted or unsubstituted naphthyl, and
An^{⊖} is the equivalent of an anion,
by oxidation of a leuco compound of the formula II 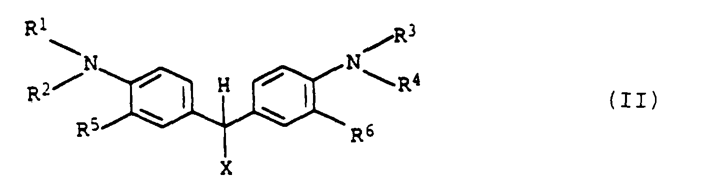 where R¹, R², R³, R⁴, R⁵, R⁶ and X are each as defined above, in the presence of a diluent and of an oxygen transfer catalyst which contains a complexed heavy metal ion, which comprises using hydrogen peroxide, a hydrogen peroxide donor compound, an organic hydroperoxide or a percarboxylic acid as oxidizing agent and selecting the oxygen transfer catalyst from the class of the porphyrins, tetraaza[14]annulenes, phthalocyanines or tetraazacyclodecanes.

2. A process as claimed in claim 1, wherein R⁵ and R⁶ are each hydrogen.

3. A process as claimed in claim 1, wherein R¹, R², R³ and R⁴ are each substituted or unsubstituted C₁-C₄-alkyl.

4. A process as claimed in claim 1, wherein X is hydrogen or substituted or unsubstituted phenyl.

5. A process as claimed in claim 1, wherein the heavy metal ion complexed within the oxygen transfer catalyst is derived from iron, manganese, cobalt or chromium.

## Revendications

1. Procédé de préparation de colorants de formule I 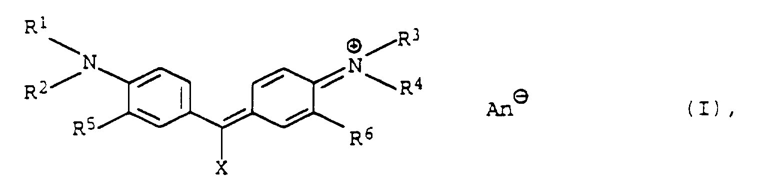 dans laquelle
R¹, R², R³ et R⁴ représentent chacun, indépendamment les uns des autres, un reste alkyle en C₁-C₈ qui est éventuellement substitué et peut être interrompu par 1 à 3 atomes d'oxygène en fonction éther, un reste phényle ou alkylphényle en C₁-C₄,
R⁵ et R⁶ représentent chacun, indépendamment l'un de l'autre, un atome d'hydrogène ou un reste méthyle,
X représente un atome d'hydrogène, un reste phényle éventuellement substitué ou un reste naphtyle éventuellement substitué et
An^{⊖} représente l'équivalent d'un anion,
par oxydation d'un composé leuco de formule II 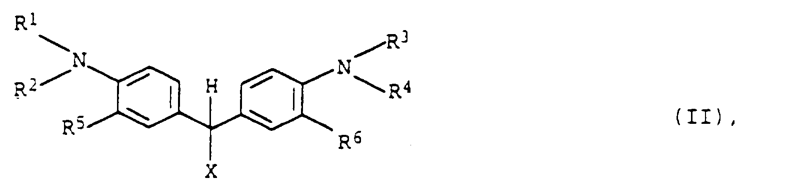 dans laquelle R¹, R², R³, R⁴, R⁵, R⁶ et X ont chacun la signification donnée ci-dessus, en présence d'un diluant et d'un catalyseur véhiculant de l'oxygène qui contient. un ion de métal lourd en liaison de complexe, caractérisé en ce que l'on utilise, comme oxydant, du peroxyde d'hydrogène, un composé libérant du peroxyde d'hydrogène, un hydroperoxyde organique ou un peracide carboxylique, et en ce que le catalyseur véhiculant de l'oxygène provient de la classe des porphyrines, des tétraaza[14]annulènes, des phtalocyanines ou des tétraazacyclodécanes.

2. Procédé selon la revendication 1, caractérisé en ce que R⁵ et R⁶ représentent chacun un atome d' hydrogène.

3. Procédé selon la revendication 1, caractérisé en ce que R¹, R², R³ et R⁴ représentent chacun un reste alkyle en C₃-C₄ éventuellement substitué.

4. Procédé selon la revendication 1, caractérisé en ce que X représente un atome d'hydrogène ou un reste phényle éventuellement substitué.

5. Procédé selon la revendication 1, caractérisé en ce que l'ion de métal lourd en liaison de complexe dans le catalyseur véhiculant de l'oxygène est dérivé de fer, de manganèse, de cobalt ou de chrome.
